# EUROPEAN PATENT SPECIFICATION

(11) **EP 1 208 922 B1**
(45) Date of publication and mention of the grant of the patent: **03.03.2004**
(21) Application number: 00490051.0
(22) Date of filing: 21.11.2000
(51) Int. Cl.: B09C 1/10

(54) **Method of sustaining plant growth in toxic substrates polluted with heavy metal elements**
Verfahren zum Unterstützen des Pflanzenwachstums in mit Schwermetallen verunreinigten giftigen Substraten
Procédé pour stimuler la croissance des plantes dans des substrats toxiques pollués par des métaux lourds

(43) Date of publication of application: 29.05.2002
(73) Proprietor: Leggo, Peter J., Dr., Linton, Cambs. CB1 6HS (GB)
(72) Inventor: Leggo, Peter J., Dr., Linton, Cambs. CB1 6HS (GB)
(74) Representative: Ecrepont, Robert

(56) References cited:
- US-A- 5 106 405
- US-A- 5 917 117
- DATABASE WPI Section Ch, Week 199551 Derwent Publications Ltd., London, GB; Class K07, AN 1995-402566 XP002166138 & RU 2 033 647 C (B. A. MAKEEV), 20 April 1995 (1995-04-20)
- DATABASE WPI Section Ch, Week 200002 Derwent Publications Ltd., London, GB; Class C04, AN 2000-021663 XP002166139 & RU 2 115 641 C (V. G. EZHOV), 20 July 1998 (1998-07-20)
- SALT D E ET AL: "PHYTOREMEDIATION: A NOVEL STRATEGY FOR THE REMOVAL OF TOXIC METALS FROM THE ENVIRONMENT USING PLANTS" BIO/TECHNOLOGY,US,NATURE PUBLISHING CO. NEW YORK, vol. 13, no. 5, 1 May 1995 (1995-05-01), pages 468-474, XP000577130 ISSN: 0733-222X

## Description

Activities in the industrial Age have resulted in the deposit of high levels of many metals in certain sites, to the point that human life is seriously threatened.

Metal-production activities, such as mining or smelting, as well as the ubiquitous use of metals, have created many sites where toxic metals have become concentrated in soils.

In recent years, efforts have been made to develop phyto-remediation methods, i.e. the use of metal-accumulating plants called metallophytes to remove contaminating metals from sites.

It has been known for some time that many plant species will concentrate certain metals in their leaves, stems and roots to a varying degree.

For heavy metals, two different types of phyto-remediation methods can be distinguish:
- rhizofiltration, by concentration of heavy metals in plan roots;
- phyto-stabilisation, the roots of the plants limiting heavy metals availability and limiting mobility of said metals into the groundwater.

More than 400 phyto-remediator are known, most of them absorbing nickel. The more rarely absorbed heavy metals include manganese, cadmium and lead.

Various metallophytes have been tested, such as Brassicaceae (Thlaspi brachypetal, Thlaspi ochroleucum, Thlaspi caerulescens, Thlaspi rotundifolium, Cardaminopsis halleri), Caryophyllaceae (Minuartia verna, Polycarpea synandra), Fabaceae (Astragalus pectinatus, Astragalus bisculatus) Myriophyllium verticillatum, Pshychotrai douerrer, Viola calaminaria.

Document US-A-5.917.117 relates to a method by which hyperaccumulation of metals in plant shoot such as Brassicaceae (e.g. Brassica, Sinapsis, Thlaspi, Alyssum, Eruca) is induced by exposure to inducing phytotoxic agents such as chelating agents (e.g. Roundup ®) and high concentrations of heavy metals. The exposure to inducing agent is made after a period of plant growth, as metal accumulation into plant shoots has dramatic negative effects on plant growth.

The use of phytotoxic inducing agents as described in document US-A-5.917.117 is non-ecological and potentially dangerous for the operator.

Document US-A-5.711.784 disclose a method of extracting nickel, cobalt and other metals including the platinum palladium metal families from soil by phytomining. The conditions include 1) lowering the soil pH by addition of sulphur and use of ammonium N fertilisers, 2) maintaining low Ca in the soil by acidification of the soil with sulphur or sulphuric acid and, 3) applying chelating agents to the soil, such as NTA.

The method described in document US-A-5.711.784 is complicated and non-ecological.

Document US-A-5.927.005 relates to a method of removing heavy metals from soil using creosote plants (Lacrea tridentate). Again, to increase the rate of metal uptake in the plants, it is proposed to increase the acidity or to add chelators to the soil in which the creosote bushes are growing.

Other phyto-remediation techniques are described in documents WO-A-00/28093, WO-A-00/31308, WO-A-98/59080, WO-A-94/01357, EP-A-0 911 387, JP-A-57.000.190, DE-A-4100758, DE-A-39.21336, US-A-5 100 455, US-A- 5.320.663, US-A-5 364 451, US-A-5 785 735, US-A-5 809 693, US-A-5 853 576, US-A-5 928 406, US-A-5.944.872, US-A-6 117 462.

Despite increasing interest and research, several problems associated with phyto-remediation remain. For example, some metals in contaminated areas may be hardly reached via phyto-remediation because they lie beneath the rhizosphère, many of the known metal-accumulating plants being simply too small to accumulate large quantities of metals. Additionally, many of the plants thus far identified as useful in phyto-remediation are from tropical regions.

One object of the invention is to provide means to increase plant root growth in toxic substrates polluted with heavy metal elements.

Another object of the invention is to provide means preventing surface erosion, especially for toxic substrates polluted with heavy metal elements.

Another object of the invention is to provide means of promoting growth of metallophytes and other plants on toxic ground polluted by the presence of heavy metal elements.

Another object of the invention is to provide above mentioned means, said means being ecological and less expensive than most of known bio-remediation methods.

According to the invention, there is provided a method of sustaining plant growth in toxic substrates polluted with heavy metal elements, characterised in that it comprises amendment of the toxic substrates with an organo-zeolitic mixture.

The heavy metal element can be zinc, copper, lead, cadmium or arsenic, the orgo-zeolitic mixture being added to the said polluted substrate between 10 % and 25 %.

The method of the present invention can be used to sustain the growth of various plants, especially plant root growth in toxic substrates polluted with heavy metal elements.

Normally, owing to the lack of available nitrogen and other essential nutrient elements, ground containing high levels of toxic metals would not sustain plant growth to a level that will prevent surface erosion. By amending the ground with the organo-zeolitic fertiliser this condition can be overcome by growing plants with very dense root systems.

The method of the present invention can be manipulated to vary the shoot to root ratio of the plant species used. In this respect, plants which concentrate heavy metals such as Zn, Cd and Cu in their shoots can be grown successfully and croped to remove the metals from the rhizosphere.

The method of the present invention will enable the metal enriched plant tissue, on ashing, to be reduced to a small volume which can be disposed of easily by mixing with zeolite amended Portland cement and used in the production of concretes that are known to have high compressive strengths.

More precisely, after harvesting and ashing the plant, the heavy metal cations contained in the ash can be put into aqueous solution and ion-exchanged into a zeolitic tuff. The resulting zeolitic material can be dried and used to produce blended cements which have improved compressive strength and are also known to reduce the expansion caused by alkali-aggregate reactions.

It is known that natural zeolite minerals can be used as biological fertiliser (see for instance JP-A-10210855, JP-A-4197110, EP-A-444392, US-A-5 082 488, US-A-5 451 242,US-A-5 900 387, RU-A-2 121 777, RU-A-2 132 122, RU-A-2 137 340). The preparation of an organic fertiliser incorporating zeolitic tuff is described in document US-4.559.073, the inclusion of the zeolitic component being claimed to lower the water content of the mixture to allow effective aerobic fermentation.

Document US-A-5.106.405 disclose the property of ion-exchanging ammonium ions that, via soil microbiological reactions, would supply available nitrogen to plants growing in a substrate amended with a bio-fertiliser containing zeolitic component.

The inventor has discovered that natural zeolite materials could be used to prepare a biological fertiliser which can be applied to ground contaminated with heavy metal cations to enable the sustainable growth of plants and to control the development of shoot to root ratio in such a way that plant morphology can be adjusted to either maximise soil retention by dense root growth or increase the foliage uptake of toxic heavy metal ions.

If untreated, such ground will not support vegetation and becomes subject to surface erosion by wind and rain. Toxic material transported by these agents into local drainage patterns is thus isolated and therefore uncontrollable.

Specific implementation of the invention will now be described, by way of example, provided for illustrative proposes and not intended to limit the scope of the invention as claimed herein. Any variations in the exemplified compositions and methods which occur to the man skilled in the art are intended to fall within the scope of the present invention.

### Example :

A clay rich toxic soil containing : 2.87 % Organic matter, 1.1 % Calcium carbonate, 2.24 % total Iron, 28.9 mg.kg⁻¹ Copper, 915 mg.kg⁻¹ Zinc, 670 mg.kg⁻¹ Lead, 12.2 mg.kg⁻¹ Cadium and 18.9 mg.kg⁻¹ Arsenic has been amended with 16.7 % organo-zeolitic fertiliser.

Organo-zeolitic fertiliser is prepared as follows.

Animal waste, e.g. chicken manure, is composted together with crushed zeolitic tuff containing the zeolite Ca, K, Clinoptilolite in a ratio of 1.2 (by volume) i.e. tuff to manure. The materials are mixed together with enough water to make the pile damp and choppen straw is added. Air is forced through the pile from a perforated plastic pipe(s) laid inside the pile during construction and the reaction is carried out under cover. This could prevent saturation of the pile with rain water.

The pile reaches 50-70 °C and then the temperature drops to ambient at which stage the composted material is dry, friable, odourless and ready for use as an organo-zeolitic fertiliser.

Spring Wheat (Triticum aestivum L, cv. Red Fife) was sown in two kilograms substrates. Wheat grown in the untreated soil was used for the comparison. The plants were grown in 255 mm diameter pots, replicated four times, under ordinary lighting conditions in a greenhouse. Watering, with de-ionised water, was by weight to field capacity (180 ml per 2 kg substrate) and the pots were placed in shallow trays to retain leachate. Watering, generally on a daily basis, prevented the plants from drying out and any water running from the pots was returned to the substrate surface with little loss. Plants were harvested on a regular basis each month and the shoot weights were recorded after drying to constant weight at 70 °C.

One month after germination the substrates were leached with 400 ml of de-ionised water (pH = 8.4) and after removal of fine colloidal particles were analysed chemically. Two further leachate collections were made at monthly intervals over a three month growth period.

### Leachate chemistry at the third harvest

| | | |
|---|---|---|
| Toxic substrate | N conc | 0.23mg/l |
| Amended substrate | N conc | 178.00 mg/l |
| Toxic Substrate | K conc | 17.38 mg/l |
| Amended Substrate | K conc | 66.70 mg/l |
| Toxic Substrate | Ca conc | 20.40 mg/l |
| Amended Substrate | Ca conc | 253.00 mg/l |
| Toxic Substrate | Mg conc | 2.69 mg/l |
| Amended Substrate | Mg conc | 27.10 mg/l |
| Toxic Substrate | pH 7.8 | E.C. 149 µS/cm |
| Amended Substrate | pH 7.2 | E.C. 2077 µS/cm |

These results demonstrate the degree of mobilisation of major cations in the amended soil solution.
In case of the metal trace elements a general decrease is seen in the leachates between high concentrations in the toxic substrates and low concentrations in the amended substrates. An example is shown below for Zinc.

| | | |
|---|---|---|
| Toxic substrate | Zn conc | 0.65 mg/L |
| Amended Substrate | Zn conc | 0.10 mg/L |

Following the analysis of the leachates the chemical analyses of the plant shoots express the way in which nutrient and trace metal elements are taken up from the respective substrates.

### Plant shoot chemistry at the third harvest

| | Amended substrate | Toxic Substrate |
|---|---|---|
| N con | 2.19 wt % | 1.16 wt % |
| K conc | 35.33 mg/g | 18.20 mg/g |
| Ca conc | 5.82 mg/g | 2.82 mg/g |
| Mg conc | 1.24 mg/g | 0.85 mg/g |
| Zn conc | 124 µg/g | 67 µg/g |
| Pb conc | 5 µg/g | 3 µg/g |
| Cu conc | 17 µg/g | 5 µg/g |

The plant shoot chemistry can now be compared to the established nutrient range for Spring Wheat.

| % dry wt | | | | | µg/g | |
|---|---|---|---|---|---|---|
| N | P | K | Ca | Mg | Zn | Cu |

| | | | | | | | |
|---|---|---|---|---|---|---|---|
| Adequate Range | 3.0-4.5 | 0.3-0.5 | 2.9-3.8 | 0.4-1.0 | 0.15-0.3 | 20-70 | 5-10 |
| Toxic Substrate | 1.16 | 0.5 | 1.80 | 0.3 | 0.10 | 67 | 5 |
| Amended Substrate | 2.19 | 0.3 | 3.50 | 0.6 | 0.12 | 124 | 17 |

### Shoot dry weight recorded at monthly harvests

| 1^{st} harvest | Dry weight (g/plant) |
|---|---|
| Toxic Substrate: | 0.26 |
| Amended Substrate: | 0.89 |
| | |

| 2^{nd} harvest | |
|---|---|
| Toxic Substrate: | 0.52 |
| Amended Substrate: | 5.36 |
| | |

| 3^{rd} harvest | |
|---|---|
| Toxic Substrate: | 1.03 |
| Amended Substrate: | 6.77 |

### Comments on example

The type of organo-zeolic fertiliser of the present invention can be adapted to grow plants with a dense root system on toxic soils that cannot normally supply sufficient plant nutrients to support such growth. This is achieved by microbiological means only as no inorganic mineral salts have been added.

It can be seen from the chemistry of the plant shoots thai when the available nitrogen in the substrate is some 35 % below the adequate range a dense root system, in the case of Spring Wheat, is formed. As the percentage of organo-zeolitic material added to the toxic soil can be altered the concentration of available nitrogen can be adjusted to suit the plant species concerned. If maximum shoot growth is required then the percentage or organo-zeolitic material can be adjusted upwards to put the nitrogen concentration into the adequate range. This would be desired if maximum plant uptake was required in order to remove heavy metals from the rhizosphere.

The trace element concentrations of zinc and copper in the plant shoots show that the mobilisation of cations in the soil solution, due to the microbial activity of the organo-zeolitic material, make these elements available to the plant. On harvesting the soil will be partially depleted in these elements and in time the rhizosphere will become less polluted. The volume of plant material after harvest can be greatly reduced by ashing and can be safely stored or possibly re-cycled. As it is known that the addition of finely crushed zeolitic tuff to Portland Cement improves its physical and chemical properties the suggestion is made that heavy metal cations remaining in the plant ash could be exchanged into zeolitic tuff which is afterwards used for such a purpose.

### Possible explanation

Proposed explanation of the above mentioned results is given below, the detailed mechanism still being the subject of research by the inventor. During organo-zeolitic fertiliser preparation, choppen straw likely provides a source of carbon to support bacterial growth. Ammonifying bacteria as typified by Clostridium and Penicillium, acting on the organic material, decompose protins, amino sugars and nucleic acids to ammonia. The ammonia in the cationic form NH4+ is ion-exchanged into the zeolite where it is held, loosely bound, within the pore space of the crystal lattice. The bacterial activity causes the increase of temperature up to 50-70 °C, the completion of the reaction being reached as the temperature drops to ambient.

On addition of the fertiliser to a plant substrate the NH4+ ions held in the zeolite pore space diffuse at an expotential rate into the substrate. Nitrifying bacteria present in the organo-zeolitic component use the diffusing NH4+ to build very large populations and in so doing oxidise NH4+ to produce a large source of nitrate that is used in plant growth. As a consequence of the bacterial reactions free hydrogen ions (protons) are liberated and mobilise the soil solution causing the dissociation of metal cations present in the substrate.

The inventor has demonstrated how the organo-zeolitic fertiliser can be used with soils polluted with heavy metals such as Zinc, Cadium, Copper and Lead. The inventor has now found that when 16-17 % organo-zeolitic fertiliser is added to such soils similar effects occur which greatly increase nitrate concentration and mobilise metal cations in the soil solution.

Amending a toxic soil in this way slightly lowers the pH of the soil solution but increases its electrical conductivity by an order of magnitude. At the level of amendment quoted (16-17 %) twice the amount of available nitrogen present in the toxic soil is provided. This increase is 35 % below the adequate range for

Spring Wheat (*Triticum aestivum* L., cv. Red Fife) and has the effect of maximising the root/shoot ratio. In this way a dense root system can be developed by increasing the amount of organo-zeolitic fertiliser added to the soil the root to shoot ratio can be decreased, in which case shoot growth is favoured.

Cation mobilisation in the soil solution provides the growing plant with nutrients such as potassium, calcium, magnesium, and zinc and the plant's requirement acts to buffer the system against concentration of these elements and diffusion from the rhizosphere. By increasing the level of plant nutrients in this way a healthy plant can be grown and sustained on toxic soils polluted with heavy metals. In the case of zinc and copper the inventor has observed that these elements are taken up by the plant at a rate that can be tolerated and the damage occurring in the same plants grown in the toxic soil is not seen. This property can be used to remove heavy metal elements from the rhizosphere by harvesting the plant. The plant material can be greatly reduced in volume by ashing without loss of the heavy metals and incorporated in a mixture of Portland Cement and finely crushed zeolitic tuff. In this way concrete of high compressive strength and low alkali reactivity can be made and used to store the heavy metal elements.

## Claims

1. A method of sustaining plant growth in toxic substrates polluted with heavy metal elements, comprising amendment of the toxic substrates with an organo-zeolitic mixture, **characterized in that** the organo-zeolitic compound comprise the zeolite mineral Ca-K clinoptilolite and animal waste.

2. The method of claim 1, wherein the heavy metal element is zinc, copper, lead, cadmium, arsenic.

3. The method of claim 1 or 2, wherein animal waste comprises chicken manure.

4. The method of claim 2 or 3, wherein the organo-zeolitic compound is prepared by composting animal waste with crushed zeolitic tuff.

5. The method of claim 4, wherein the ratio by volume of tuff to animal waste is roughly 1:2.

6. The method of claim 4 or 5, wherein a source of carbon is mixed with zeolitic tuff and animal waste.

7. The method of claim 6, wherein said source of carbon comprises choppen straw.

8. The method of any one of claims 1 to 7, wherein said organo-zeolitic compound is added to said polluted substrates between 10 % and 25 %.

9. Use of the method defined in any of claims 1 to 8 to sustain growth of spring wheat.

10. The use of the method defined in any of claims 1 to 8 to sustain growth of metallophyte plants, metal-containing metallophyte plant tissues being collected and removed at appropriate intervals.

11. The use defined in claim 10, wherein heavy metal cations remaining in the plant ash is exchanged into zeolitic tuff to be added to a cement or equivalent.

## Patentansprüche

1. Verfahren zur Aufrechterhaltung des Pflanzenwachstums in toxischen Substraten, die durch Schwermetallelemente verunreinigt sind, bei dem die toxischen Substrate mit einer organo-zeolithischen Mischung behandelt werden, **dadurch gekennzeichnet, dass** die organo-zeolithische Mischung umfasst das Zeolith-Mineral Ca-K-Klinoptilolith und tierische Abfälle.

2. Verfahren nach Anspruch 1, worin das Schwermetallelement Zink, Kupfer, Blei, Cadmium, Arsen ist.

3. Verfahren nach Anspruch 1 oder 2, worin die tierischen Abfälle Hühner-Dung umfassen.

4. Verfahren nach Anspruch 2 oder 3, worin die organo-zeolithische Mischung hergestellt wird durch Kompostieren von tierischen Abfällen mit zerkleinertem zeolithischem Tuff.

5. Verfahren nach Anspruch 4, worin das Volumenverhältnis von Tuff zu tierischen Abfällen etwa 1 : 2 beträgt.

6. Verfahren nach Anspruch 4 oder 5, worin eine Kohlenstoffquelle mit zeolithischem Tuff und tierischen Abfällen gemischt wird.

7. Verfahren nach Anspruch 6, worin die Kohlenstoffquelle zerhacktes Stroh umfasst.

8. Verfahren nach einem der Ansprüche 1 bis 7, worin die organo-zeolithische Mischung den verunreinigten Substraten in einer Menge zwischen 10 und 25 % zugesetzt wird.

9. Anwendung des Verfahrens nach einem der Ansprüche 1 bis 8 zur Aufrechterhaltung des Wachstums von Sommerweizen.

10. Anwendung des Verfahrens nach einem der Ansprüche 1 bis 8 zur Aufrechterhaltung des Wachstums von Metallophyten-Pflanzen, Metall-haltigen Metallophyten-Pflanzengeweben, die in geeigneten Zeitabständen gesammelt und entfernt werden.

11. Anwendung nach Anspruch 10, worin die Schwermetallkationen, die in der Pflanzenasche zurückbleiben, durch Austausch in zeolitischen Tuff eingeführt werden, der Zement oder einem Äquivalent zugesetzt wird.

## Revendications

1. Procédé pour entretenir la croissance de végétaux dans des substrats toxiques pollués par des éléments de métaux lourds, comprenant l'amendement des substrats toxiques par un mélange organo-zéolitique, **caractérisé en ce que** le composé organo-zéolitique comprend le minéral zéolitique clinoptilolite de Ca-K et des déchets animaux.

2. Procédé selon la revendication 1, dans lequel l'élément de métal lourd est le zinc, le cuivre, le plomb, le cadmium, l'arsenic.

3. Procédé selon la revendication 1 ou 2, dans lequel les déchets animaux comprennent du fumier de poulet.

4. Procédé selon la revendication 2 ou 3, dans lequel le composé organo-zéolitique est préparé par compostage de déchets animaux avec un tuf zéolitique broyé.

5. Procédé selon la revendication 4, dans lequel le rapport en volume du tuf aux déchets animaux est d'environ 1:2.

6. Procédé selon la revendication 4 ou 5, dans lequel une source de carbone est mélangée au tuf zéolitique ou aux déchets animaux.

7. Procédé selon la revendication 6, dans lequel ladite source de carbone comprend de la paille hachée.

8. Procédé selon l'une quelconque des revendications 1 à 7, dans lequel ledit composé organo-zéolitique est ajouté auxdits substrats pollués en une quantité de 10 à 25 %.

9. Utilisation du procédé selon l'une quelconque des revendications 1 à 8 pour entretenir la croissance du blé de printemps.

10. Utilisation du procédé selon l'une quelconque des revendications 1 à 8 pour entretenir la croissance de végétaux métallophytes, les tissus des végétaux métallophytes contenant des métaux étant moissonnés et retirés à des intervalles appropriés.

11. Utilisation selon la revendication 10, pour laquelle les cations de métaux lourds restant dans les cendres végétales sont échangés dans un tuf zéolitique, devant être ajouté à un ciment ou équivalent.
